(19)
Europäisches Patentamt
European Patent Office
Office européen des brevets

(11) **EP 2 537 168 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(21) Anmeldenummer: **11717169.4**

(22) Anmeldetag: **10.02.2011**

(51) Int Cl.:
*H01G 11/24* *(2013.01)*     *H01G 11/26* *(2013.01)*
*H01G 11/32* *(2013.01)*

(86) Internationale Anmeldenummer:
**PCT/DE2011/000153**

(87) Internationale Veröffentlichungsnummer:
**WO 2011/100963 (25.08.2011 Gazette 2011/34)**

(54) **DOPPELSCHICHTKONDENSATOR**

DOUBLE-LAYER CAPACITOR

CONDENSATEUR À DOUBLE COUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2010 DE 102010022831**
**17.02.2010 DE 102010009308**

(43) Veröffentlichungstag der Anmeldung:
**26.12.2012 Patentblatt 2012/52**

(73) Patentinhaber: **Fraunhofer-Gesellschaft zur Förderung der angewandten Forschung e.V.**
**80686 München (DE)**

(72) Erfinder:
- **KASKEL, Stefan**
  **01159 Dresden (DE)**
- **ROSE, Markus**
  **52074 Aachen (DE)**
- **BORCHARDT, Lars**
  **01187 Dresden (DE)**

(74) Vertreter: **Pfenning, Meinig & Partner GbR Patent- und Rechtsanwälte**
**An der Frauenkirche 20**
**01067 Dresden (DE)**

(56) Entgegenhaltungen:
**EP-A1- 1 049 116       EP-A1- 1 516 893**
**US-A1- 2006 165 584**

- **DASH ET AL: "Synthesis, structure and porosity analysis of microporous and mesoporous carbon derived from zirconium carbide", MICROPOROUS AND MESOPOROUS MATERIALS, ELSEVIER SCIENCE PUBLISHING, NEW YORK, US, Bd. 86, Nr. 1-3, 28. November 2005 (2005-11-28), Seiten 50-57, XP005159930, ISSN: 1387-1811, DOI: DOI: 10.1016/J.MICROMESO.2005.05.047**

**Beschreibung**

Die Erfindung betrifft Doppelschichtkondensatoren, die auch als "Supercaps" bezeichnet werden und mit denen eine Speicherung elektrischer Energie mit hoher Energiedichte und spezifischer elektrischer Kapazität möglich ist. Dabei werden zwei Elektroden mit einem Elektrolyten benetzt oder sie sind in einem Elektrolyten angeordnet. Die beiden Elektroden sind elektrisch voneinander getrennt, Hierfür wird üblicherweise eine elektrisch isolierende Membran zwischen den beiden Elektroden angeordnet. Bei einem Ladevorgang des Kondensators wird eine elektrische Potentialdifferenz zwischen den beiden Elektroden genutzt und Elektrolytionen werden dabei in Form einer elektrochemischen Doppelschicht an der Elektrodenoberfläche angereichert. Ionen mit elektrisch positiver Ladung werden an der Elektrode mit negativem elektrischen Potential und Ionen mit negativem elektrischen Potential werden an der positiven Elektrode angereichert. Bei einer Entladung diffundieren die Ionen von der Oberfläche wieder zurück und es kommt zu einem Ladungsausgleich im Elektrolyten.

Dabei ist es bekannt, dass vorteilhaft ein Elektrodenwerkstoff eingesetzt werden soll, der eine sehr große spezifische Oberfläche und möglichst viele kleine Poren aufweist. Diese Anforderungen können von Kohlenstoff in unterschiedlichster Modifizierung erfüllt werden. So poröser Kohlenstoff kann aus Kohlenstoff enthaltenden Vorprodukten hergestellt werden.

So wird in WO 2003/123784 A2 vorgeschlagen die Elektroden aus Kohlenstoff auszubilden, der durch chemische Reaktion von TiC erhalten worden ist. Für eine gute Speicherung von Elektrolytionen sollen dabei aber ausschließlich Poren mit einer Porengröße im Bereich 0,1 nm bis 3 nm vorhanden sein. Es soll eine maximale Abweichung von einer mittleren Porengröße von 0,05 nm zugelassen sein.

Demzufolge sind im Kohlenstoffwerkstoff nur Poren mit äußerst kleiner Porengröße im kleinen Nanometerbereich vorhanden. Es dürfen also keine größeren Poren im Mesoporengrößenbereich gemäß der diesem Stand der Technik entnehmbaren technischen Lehre vorhanden sein. Die Porengröße ist ausschließlich auf das Speichervermögen für Elektrolytionen ausgelegt. Eine differenziertere Porengrößenausbildung ist auch mit dem darin beschriebenen Herstellungsverfahren nicht möglich. Da durch die chemische Behandlung mit Chlorgas von pulverförmigem TiC bei erhöter Temperatur nur eine gleichförmige Porenbildung erreicht werden kann, da das Titan gleichmäßig in $TiCl_4$ im Volumen umgesetzt wird.

Es hat sich herausgestellt, dass mit einem solchen Elektrodenwerkstoff die elektrischen Eigenschaften eines Kondensators im Vergleich zu in anderer Form modifiziertem Kohlenstoff als Elektrodenwerkstoff verbessert werden konnten.

Ein besonderer Vorteil dieser Doppelschichtkondensatoren ist die sehr hohe erreichbare Anzahl an Lade-/Entladezyklen sowie die hohe spezifische elektrische Kapazität. Die aus WO 2009/123784 A2 bekannten Doppelschichtkondensatoren können diesen Vorteil aber nur bedingt ausnutzen, da ihr Ansprechverhalten beim Laden und Entladen Defizite aufweist, was sich insbesondere bei hohen elektrischen Stromdichten nachteilig auswirkt. Bei einem Betrieb mit hoher Leistung kann damit aber nur ein begrenzter Teil der Kapazität ausgenutzt werden. Für eine Nutzung der gesamten Kapazität sind größere Zeiten für eine Ladung und Entladung eines solchen Kondensators erforderlich.

Von R. K. Dash u.a. sind in "Synthesis, structure and porosity analysis of microporous and mesoporous carbon derived from zirconium carbide"; ELSEVIER SCIENCE PUBLISHING, NEW YORK; US; Bd. 86; Nr. 1-3; 28. November 2005; Seiten 50-57; ISSN: 1387-1811; DOI: DOI:10.1016/J.MICROMESO.2005.05.047 ein Doppelschichtkondensator beschrieben, bei dem zwei Elektroden in einem Abstand zueinander angeordnet und aus porösem Kohlenstoff gebildet sind.

Es ist daher Aufgabe der Erfindung Doppelschichtkondensatoren zur Verfügung zu stellen, die eine hohe spezifische Kapazität, Energie- und Leistungsdichte sowie beim Laden und Entladen ein verbessertes Ansprechverhalten aufweisen und außerdem die Elektroden der Doppelschichtkondensatoren mit definierter Porosität reproduzierbar herstellbar sind.

Erfindungsgemäß wird diese Aufgabe mit Doppelschichtkondensatoren, die die Merkmale des Anspruchs 1 aufweisen, gelöst. Vorteilhafte Ausgestaltungen und Weiterbildungen der Erfindung können mit in untergeordneten Ansprüchen bezeichneten Merkmalen erreicht werden.

Bei einem erfindungsgemäßen Doppelschichtkondensator sind zwei Elektroden vorhanden, die in einem Abstand zueinander angeordnet sind. Zwischen den Elektroden kann dafür eine diese elektrisch voneinander trennende Membran angeordnet sein, die für den Elektrolyten, zumindest die Elektrolytionen durchlässig ist. Die Elektroden sind aus porösem Kohlenstoff gebildet. Der Kohlenstoff mit dem mindestens eine der Elektroden gebildet ist, ist durch chemische Reaktion aus einem Carbid erhalten worden. Die Elektroden sind mit elektrischen Anschlusskontakten versehen und der Doppelschichtkondensator ist in einem Elektrolyten angeordnet oder von diesem benetzt. Der die mindestens eine Elektrode bildende Kohlenstoff weist eine spezifische Oberfläche von mindestens 2000 $m^2$/g auf. Neben Poren mit einer ersten Porengrößenfraktion bis maximal 2 nm ist zusätzlich eine zweite Porengrößenfraktion mit einer Porengröße größer 2 nm bis maximal 10 nm im Kohlenstoff vorhanden. Ein solcher Kohlenstoff wird auch als CDC (Carbide derived Carbon) bezeichnet. Die Porengröße der ersten Porengrößenfraktion sollte zwischen 1 nm und 2 nm liegen.

Vorteilhaft ist es dabei, dass Poren der ersten Porengrößenfraktion von maximal 2 nm mit einem Anteil 0,3 cm$^3$/g bis 1,5 cm$^3$/g, bevorzugt bis 0,7 cm$^3$/g und Poren der zweiten Porengrößenfraktion im Bereich von 2 nm bis zu 10 nm mit einem Anteil 0,2 cm$^3$/g bis 1,8 cm$^3$/g, bevorzugt 0,8 cm$^3$/g bis 1,8 cm$^3$/g im Kohlenstoff vorhanden sind. Dadurch kann gewährleistet werden, dass neben einer hohen erreichbaren Energiedichte und Kapazität auch ein guter und schnellerer Ionentransport beim in die Poren hinein und auch wieder heraus diffundieren der Elektrolytionen zum Laden und Entladen möglich ist.

Durch die Art und Weise der Herstellung des aus Carbid erhaltenen Kohlenstoffs sind die Poren der zweiten Porengrößenfraktion (Mesoporen) in einer periodischen/gerichteten Ordnung vorhanden, bevorzugt werden sie in einem kubischen und/oder hexagonalen Gitter angeordnet. Dadurch kann eine direkte Verbindung der inneren Oberfläche zur äußeren Oberfläche für die Diffusion von Ionen genutzt werden.

Günstig ist es dabei, wenn Poren der ersten und der zweiten Porengrößenfraktion im die Elektroden bildenden Kohlenstoff homogen verteilt angeordnet sind.

Dabei liegt die Porengröße der Poren, die der zweiten Porengrößenfraktion zugeordnet werden können, und auch als Mesoporen bezeichnet werden, oberhalb der Größe der genutzten Elektrolytionen. Sie kann mindestens zweimal größer als die Ionengröße sein.

Die bei der Erfindung einsetzbaren Elektroden können bevorzugt mit Kohlenstoff und Poren mit einer Porengröße im Bereich 2 nm bis 10 nm aufweisendem SiC gebildet werden. Wie dies erreichbar ist, soll nachfolgend noch beschrieben werden.

Die metallischen elektrischen Anschlusskontakte können mit einer elektrisch leitenden Schicht auf der der Membran gegenüberliegenden Seite der Elektroden mit den Elektroden stoffschlüssig und elektrisch leitend verbunden werden. Dadurch kann der elektrische Übergangswiderstand zwischen Elektrode und Anschlusskontakt verringert werden. Die elektrische Leitfähigkeit kann mit einem hohen Anteil an Graphit in einem Polymer oder einem anderen geeigneten Binder erreicht werden.

Die beiden Elektroden eines Doppelschichtkondensators sollten jeweils eine Schichtdicke im Bereich 30 μm bis 300 μm aufweisen.

Der die Elektroden bildende Kohlenstoff kann mit einem Polymer gebunden sein, wobei der Anteil an Polymer kleiner 20 Masse-%, bevorzugt kleiner 10 Masse-%, besonders bevorzugt bis maximal 5 Masse-% gehalten sein sollte.

Mit erfindungsgemäßen Doppelschichtkondensatoren können spezifische elektrische Kapazitäten von bis zu 180 F/g erreicht werden. Es kann eine spezifische O-berfläche des Elektrodenwerkstoffs bis in den Bereich von 2500 m$^2$/g bis hin zu 3000 m$^2$/g erreicht werden.

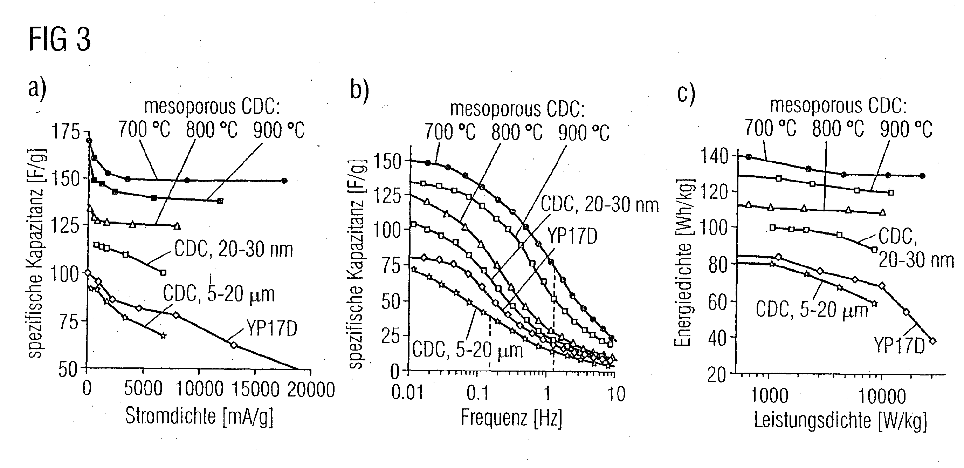

Besonders vorteilhaft wirkt sich die Erfindung bei hohen elektrischen Lade- und Entladeströmen aus. So kann ein erfindungsgemäßer Doppelschichtkondensator bei 17 A/g noch 89 % seiner Gesamtkapazität aufweisen, wohingegen ein vergleichbarer Kondensator mit Elektroden, die aus herkömmlichem Kohlenstoff gebildet sind, mit dem gleichen Aufbau bei vergleichbaren Bedingungen nur 51 % der Gesamtkapazität erreichen kann. Dieser Sachverhalt kann dem in Figur 3a gezeigten Diagramm entnommen werden.

Nachfolgend soll die Erfindung beispielhaft näher erläutert werden.

Dabei zeigen:

Figur 1 in schematischer Form einen Aufbau eines Doppelschichtkondensators;

Figur 2 in schematischer Form den Aufbau eines aus Mesoporen aufweisenden Vorprodukts aus SiC und

Figuren 3a bis 3c Diagramme für Elektroden, die mit bei verschiedenen Temperaturen aus SiC erhalten worden sind.

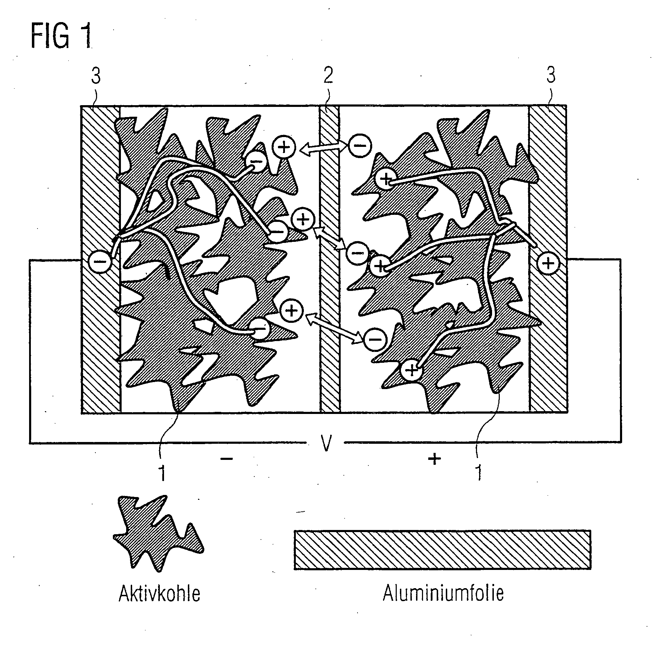

Der prinzipielle Aufbau eines Doppelschichtkondensators ist in Figur 1 nicht maßstabsgerecht gezeigt.

Zwischen zwei Kohlenstoffelektroden 1 ist eine ionenpermeable Membran 2 angeordnet, die die beiden Elektroden 1 voneinander trennt aber in flächigem berührenden Kontakt mit ihnen steht. An den gegenüberliegenden Oberflächen sind elektrische Anschlusskontakte 3 an den Elektroden 1 befestigt, über die die elektrisch leitende Verbindung zu einer elektrischen Spannungsquelle oder in nicht dargestellter Form zu einem Verbraucher hergestellt werden kann. Ein Doppelschichtkondensator kann in allen erdenklichen Kondensatorformen (z.B. als gestapelte oder gewickelte Anordnung) zur Verfügung gestellt werden. Die Ionen eines um den Doppelschichtkondensator vorhandenen Elektrolyten können beim Laden des Kondensators in die Porenstruktur der Elektroden 1 eindiffundieren und bis zu einem Entladevorgang innerhalb der Poren gehalten werden. Dabei wird die Ladung durch die schnellere Diffusion mit den Poren der zweiten Porengrößenfraktion beschleunigt. Die Poren der ersten Porengrößenfraktion sind für die Speicherung der Ionen besser geeignet.

Beim Entladen kehrt sich der Ionentransport um und die bis dahin in den Poren der Elektroden 1 eingeschlossenen Ionen verlassen den Elektrodenwerkstoff und gelangen wieder in den Elektrolyten.

An Hand eines Ausführungsbeispiels sollen Möglichkeiten für die Herstellung eines Beispiels eines erfindungsgemäßen Doppelschichtkondensators erläutert werden.

Für die Herstellung eines bei der Erfindung für Elektroden einsetzbaren Kohlenstoffs kann ein erstes Vorprodukt aus $SiO_2$ in dem Mesoporen, also Poren mit einer Porengröße im Bereich 2 nm bis 50 nm eingesetzt werden. 2 g dieses $SiO_2$ werden dann mit 2,5 g einer Polycarbosilanlösung in Heptan-Butanol infiltriert und bei Rühren über ca. 12 h die Flüssigkeit verdampft.

Das erhaltene Pulver wird dann in einem Aluminiumoxidschiffchen in einem Ofen unter Argon mit einem Volumenstrom von ca. 40 ml/min bis zu einer Temperatur von 1000 °C erwärmt. Dabei wird zuerst ausgehend von Raumtemperatur auf 300 °C mit einer Heizrate von 2,5 K/min aufgeheizt und dann die 300 °C über einen Zeitraum von 5 h gehalten. Im Anschluss daran wird mit einer Heizrate von 0,5 K/min auf 700 °C erwärmt und nach Erreichen der 700 °C die Heizrate auf 2 K/min erhöht und die Temperatur bis auf 1000 °C erhöht. Diese Temperatur wird über 2 h gehalten und dann auf Raumtemperatur abgekühlt.

Dabei kann zusätzlich ein Vorprodukt eingesetzt werden, bei dem zusätzlicher Kohlenstoff durch Infiltration mit Divinylbenzen mit Polycarbosilan eingebracht wird. Dies kann über einen Zeitraum von ca. 12 h unter Unterdruck (Vakuum) erfolgen. Bei den nachfolgenden Beispielen ist dies für eine Probe, die bei 800 °C mittels Chlor behandelt worden ist, so durchgeführt worden.

Nach der ersten Wärmebehandlung, die vorab beschrieben wurde, wurde wieder eine Erwärmung in einer Argonatmosphäre auf 300 °C mit einer Heizrate von 2,5 K/min vorgenommen. Diese Temperatur wurde über 5 h gehalten. Im Anschluss daran wurde die Temperatur auf 700 °C erhöht. Das Aufheizen erfolgte mit einer Heiz-rate von 0,5 K/min. Nach Erreichen der 700 °C wurde die Temperatur mit auf 2 K/min erhöhter Heizrate auf 1000 °C erhöht und die 1000 °C über einen Zeitraum von 2 h gehalten und dann auf Raumtemperatur abgekühlt. Anschließend wurde die Siliziumoxid-Matrix durch einen Ätzschritt in einer Lösung aus 40 ml Wasser, 40 ml Flusssäure (40 %) entfernt, danach mit einem Überschuss Ethanol gewaschen und anschließend getrocknet.

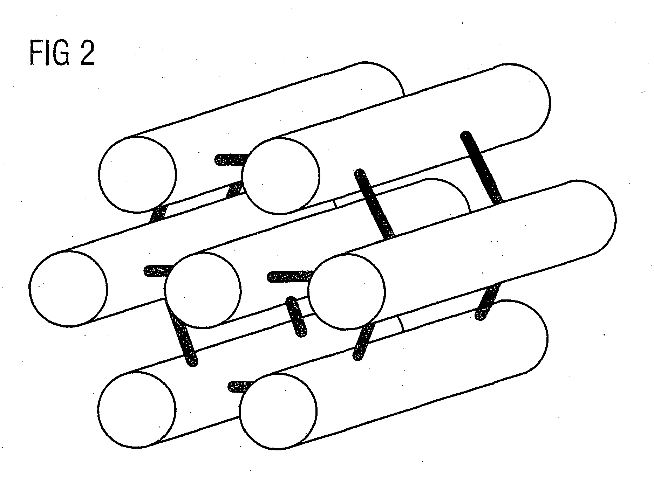

So konnte ein Vorprodukt aus SiC erhalten werden, in dem Mesoporen mit einer Porengröße im Bereich 2 nm bis 8 nm, also der zweiten Porengrößenfraktion vorhanden und hexagonal angeordnet waren. Figur 2 zeigt dies in schematischer Form. Wie nachfolgend noch erläutert wird, können dann zusätzlich Poren der ersten Porengrößenfraktion durch Entfernung von Silicium in den stäbchenförmigen Bereichen ausgebildet werden.

Das SiC-Vorprodukt wurde einer weiteren Wärmebehandlung unterzogen, um das Silicium zu entfernen. Dabei wurde bei drei Proben eine Erwärmung auf eine maximale Temperatur von 700 °C (mesopourous CDC 700 °C), 800 °C (mesopourous CDC 800 °C) und 900 °C (mesopou-rous CDC 900 °C) mit einer Heizrate von 7,5 K/min in einer Chloratmosphäre durchgeführt. Die jeweilige Maximaltemperatur wurde über 2 h gehalten. Dabei wurde gemäß

$$SiC + 2\,Cl_2 \rightarrow SiCl_4 + C$$

der Kohlenstoff für den Elektrodenwerkstoff gebildet.

Zur Entfernung von Restchlor wurde anschließend bei 600 °C über 3 h Ammoniak eingesetzt.

Das erhaltene Kohlenstoff pulver wurde mit einer Ethanol Polytetrafluorethylen (PTFE) Mischung als Lösung in 60 Masse-% Wasser vermischt. Die Erhaltene Mischung enthielt 95 Masse-% Kohlenstoff und 5 Masse-% PTFE. Das Ethanol ist durch Verdampfen entfernt worden. Die lösungsmittelfreie Kohlenstoff-PTFE-Mischung mit pastöser Konsistenz wurde über einen Zeitraum von mindestens 8 h bei 80 °C im Vakuum getrocknet und konnte als dünne Schicht, mit einer Schichtdicke von 150 $\mu$m für Elektroden eines Doppelschichtkondensators mit symmetrischem Aufbau eingesetzt werden. Die mit dem PTFE gebundenen Kohlenstoffpartikel wiesen Poren mit beiden Porengrößenfraktionen auf. In jedem Partikel konnte mit den Poren der zweiten Porengrößenfraktion eine direkte Verbindung von äußerer Oberfläche des Partikels zu innerer Oberfläche des Partikels, für eine Ionenbewegung, in die Poren der ersten Porengrößenfraktion und wieder aus diesen heraus, erreicht werden.

Für die elektrischen Anschlusskontakte wurde 300 $\mu$m Dicke Aluminiumfolie eingesetzt, die an der Oberfläche mit der sie mit einer Elektrode verbunden werden sollte, aufgeraut worden ist. Auf diese Oberfläche erfolgte ein Auftrag einer elektrisch leitenden Schicht, mit der die den Anschlusskontakt bildende Aluminiumfolie mit der einen Oberfläche einer Elektrode vollflächig stoffschlüssig und elektrisch leitend verbunden wird.

Als Membran wurde eine 25 $\mu$m Dicke eine Porosität von 60 % aufweisende für Elektrolytionen permeable Membran zwischen die beiden Elektroden eines Doppelschichtkondensators angeordnet. Die Elektroden lagen dabei flächig an der Membran an den beiden gegenüberliegenden Seiten an. Dieser Aufbau wurde zwischen zwei Platten aus PTFE geklemmt und in ein mit Argon gefülltes Gefäß gegeben. In der Gefäßatmosphäre war weniger als 1 ppm Wasser enthalten. Zum Ausgasen wurde eine Erwärmung auf 120 °C durchgeführt. Dies erfolgte über einen Zeitraum von 2 h. Nach Abkühlung auf Raumtemperatur wurde der Doppelschichtkondensator in ein Gefäß aus Glas eingesetzt in dem als ein Beispiel eines geeigneten organischen Elektrolyts 1 M Tetraethylammonium Tetrafluorboratsalz (TEABF$_4$) in einer Acetonitrillösung 99,9 % extra trocken, wie sie von Acros Organics, Geel Belgien erhältlich ist, enthalten war. Vor der Herstellung wurde das TEABF$_4$-Salz in einem Vakuumofen bei 150 °C im geschlossenen Gefäß über 2 h getrocknet.

Für die elektrochemischen Untersuchungen war das den Doppelschichtkondensator mit Elektrolyten enthaltende Glasgefäß in einem gasdichten Glasgefäß aufgenommen, durch das von außen elektrische Zuleitungen geführt waren.

Dabei wurden elektrochemische Untersuchungen bei Lade- und Entladevorgängen durchgeführt. Die elektrochemische Impedanz-Spektroskopie wurde bei Frequenzen im Bereich 10 mHz bis 100 kHz mit einer 10 mV Wechselspannungsamplitude bestimmt.

Die gravimetrische Kapazität C (F/g) wurde nach

$$C = 2/2\pi f Im(Z)m$$

bestimmt. Dabei ist f die Betriebsfrequenz in Hz, Im(Z) der imaginäre Teil des Gesamtwiderstands in Ohm und m die Masse des Kohlenstoffs der jeweiligen Elektrode in g.

Das Laden und Entladen erfolgte mit elektrischen Spannungen zwischen 0 V und 2 V. Die elektrischen Ströme lagen im Bereich 100 mA/g bis 15000 mA/g in Bezug auf die Masse der Elektroden.

Die gravimetrische Kapazität C (F/g) kann mit

$$C = 2I/(dV/dt)m$$

bestimmt werden. Dabei ist I der elektrische Strom (A), dV/dt der Anstieg der Entladungskurve (V/s) und m die Masse an Kohlenstoff in g jeder Elektrode.

Die Energiedichte E (Wh/kg) kann für die Elektroden mit

$$E = (CV^2/2) * 1000 (g/kg) * (1/3600) (Wh/J)$$

bestimmt werden. Dabei sind C die gravimetrische Kapazität der Elektrode (F/g) berechnet bei verschiedenen Stromdichten, V ist die elektrische Betriebsspannung eines Doppelschichtkondensators. Die Leistungsdichte P (W/kg) kann durch Teilung der Energiedichten der Elektroden durch die Entladezeit (in h) bei verschiedenen Stromdichten berechnet werden.

Dies ist für verschiedene Elektrodenwerkstoffe, die bei unterschiedlichen Temperaturen (700 °C, 800 °C und 900°C) und Chlorgaszufuhr hergestellt worden sind, den Diagrammen der Figuren 3a bis 3c entnehm-bar. Die nachfolgende Tabelle 1 gibt dabei die untersuchten Elektrodenwerkstoffe wieder. Bei CDC, 5-20 $\mu$m, CDC 20-30 nm und YP17D handelt es sich um herkömmliche Vergleichsbeispiele.

Tabelle 1

| Bezeichnung | Beschreibung |
|---|---|
| mesoporous CDC, 700°C | erfindungsgemäß, Chlorierungstemperatur 700°C |
| mesoporous CDC, 800°C | erfindungsgemäß, Chlorierungstemperatur 800°C |
| mesoporous CDC, 900°C | erfindungsgemäß, Chlorierungstemperatur 900°C |
| CDC, 5-20 $\mu$m | CDC aus konventionellen SiC-Mikro-Partikeln |
| CDC, 20-30 nm | CDC aus SiC-Nanopartikeln konventionell |
| YP17D | kommerzielle Aktivkohle (Kuraray Chemical, Osaka, Japan) |

Die Tabelle 2 gibt für erfindungsgemäße Elektrodenwerkstoffe und Vergleichbeispiele jeweils erreichte Werte für die spezifische Oberfläche und den Anteil der Poren mit Durchmesser größer 2 nm an der spezifischen Oberfläche an.

Tabelle 2

| Bezeichnung | Spezifische Oberfläche (m$^2$/g) | Oberfläche von Poren > 2 nm (m$^2$/g) |
|---|---|---|
| mesoporous CDC, 700°C | 2250 | 490 |
| mesoporous CDC, 800°C | 2430 | 490 |

# EP 2 537 168 B1

(fortgesetzt)

| Bezeichnung | Spezifische Oberfläche (m²/g) | Oberfläche von Poren > 2 nm (m²/g) |
|---|---|---|
| mesoporous CDC, 900°C | 2420 | 480 |
| CDC, 5-20 μm | 1100-1200 | 13-40 |
| CDC, 20-30 nm | 1300-1310 | 220-260 |

**Patentansprüche**

1. Doppelschichtkondensator, bei dem zwei Elektroden (1) in einem Abstand zueinander angeordnet sind, wobei die Elektroden (1) aus porösem Kohlenstoff gebildet und mit elektrischen Anschlusskontakten (3) versehen sind und der Doppelschichtkondensator in einem Elektrolyten angeordnet ist oder die Elektroden (1) mit einem Elektrolyten benetzt sind;
dabei bei mindestens einer Elektrode (1) der die Elektrode(n) (1) bildende Kohlenstoff durch chemische Reaktion aus einem Carbid erhalten worden ist und eine spezifische Oberfläche von mindestens 2000 m²/g aufweist und neben Poren mit einer ersten Porengrößenfraktion mit Porengrößen bis maximal 2 nm zusätzlich eine zweite Porengrößenfraktion mit einer Porengröße größer 2 nm bis maximal 20 nm im Kohlenstoff vorhanden sind, **dadurch gekennzeichnet, dass**
Poren der zweiten Porengrößenfraktion in einer periodischen Ordnung im Kohlenstoff vorliegen.

2. Doppelschichtkondensator nach Anspruch 1, **dadurch gekennzeichnet, dass** Poren der ersten Porengrößenfraktion von maximal 2 nm mit einem Anteil 0,3 cm³/g bis 1,5 cm³/g und Poren der zweiten Porengrößenfraktion im Bereich von 2 nm bis zu 10 nm mit einem Anteil 0,2 cm³/g bis 1,8 cm³/g im Kohlenstoff vorhanden sind.

3. Doppelschichtkondensator nach Anspruch 1 oder 2, **dadurch gekennzeichnet, dass** Poren der zweiten Porengrößenfraktion im kubischen und/oder hexagonalen Gitter und im Kohlenstoff angeordnet sind.

4. Doppelschichtkondensator nach einem der vorhergehenden Ansprüche, **dadurch gekennzeichnet, dass** Poren der ersten und der zweiten Porengrößenfraktion im die Elektroden (1) bildenden Kohlenstoff homogen verteilt angeordnet sind.

5. Doppelschichtkondensator nach einem der vorhergehenden Ansprüche, **dadurch gekennzeichnet, dass** die Elektroden (1) mit Kohlenstoff und Poren mit einer Porengröße im Bereich 2 nm bis 10 nm aufweisendem SiC gebildet sind.

6. Doppelschichtkondensator nach einem der vorhergehenden Ansprüche, **dadurch gekennzeichnet, dass** metallische elektrische Anschlusskontakte (3) mit einem elektrisch leitenden Polymer auf der einer Membran (2) gegenüberliegenden Seite der Elektroden (1) mit den Elektroden (1) stoffschlüssig und elektrisch leitend verbunden sind.

7. Doppelschichtkondensator nach einem der vorhergehenden Ansprüche, **dadurch gekennzeichnet, dass** die Elektroden (1) eine Schichtdicke im Bereich 30 μm bis 300 μm aufweisen.

8. Doppelschichtkondensator nach einem der vorhergehenden Ansprüche, **dadurch gekennzeichnet, dass** der die Elektroden (1) bildende Kohlenstoff mit einem Polymer gebunden ist, wobei der Anteil an Polymer kleiner 20 Masse-% ist.

9. Doppelschichtkondensator nach einem der vorhergehenden Ansprüche, **dadurch gekennzeichnet, dass** zwischen den Elektroden (1) eine elektrisch isolierende und für den Elektrolyten durchlässige Membran (2) angeordnet ist.

**Claims**

1. A double-layer capacitor, in which two electrodes (1) are arranged spaced apart from each other, wherein the electrodes (1) are formed from porous carbon and are provided with electrical connecting contacts (3), and the double-layer capacitor is arranged in an electrolyte or the electrodes (1) are wetted with an electrolyte; therein, in the case of at least one electrode (1) the carbon forming the electrode(s) (1) has been obtained from a carbide by chemical reaction and has a specific surface area of at least 2000 $m^2/g$, and, in addition to pores with a first pore size fraction with pore sizes of up to at most 2 nm, additionally a second pore size fraction with a pore size of greater than 2 nm up to at most 20 nm is present in the carbon, **characterised in that** pores of the second pore size fraction are present in the carbon in a periodic order.

2. A double-layer capacitor according to Claim 1, **characterised in that** pores of the first pore size fraction of at most 2 nm are present in the carbon with a proportion of 0.3 $cm^3/g$ to 1.5 $cm^3/g$, and pores of the second pore size fraction in the range from 2 nm up to 10 nm with a proportion of 0.2 $cm^3/g$ to 1.8 $cm^3/g$.

3. A double-layer capacitor according to Claim 1 or 2, **characterised in that** pores of the second pore size fraction are arranged in the cubic and/or hexagonal lattice and in the carbon.

4. A double-layer capacitor according to one of the preceding claims, **characterised in that** pores of the first and the second pore size fraction are arranged in a homogeneous distribution in the carbon which forms the electrodes (1).

5. A double-layer capacitor according to one of the preceding claims, **characterised in that** the electrodes (1) are formed with carbon and SiC having pores with a pore size in the range 2 nm to 10 nm.

6. A double-layer capacitor according to one of the preceding claims, **characterised in that** metallic electrical connecting contacts (3) are connected to the electrodes (1) in a material-to-material connection and in electrically conductive manner with an electrically conductive polymer on the side of the electrodes (1) which is located opposite a membrane (2).

7. A double-layer capacitor according to one of the preceding claims, **characterised in that** the electrodes (1) have a layer thickness in the range 30 $\mu$m to 300 $\mu$m.

8. A double-layer capacitor according to one of the preceding claims, **characterised in that** the carbon forming the electrodes (1) is bound with a polymer, the proportion of polymer being less than 20% by weight.

9. A double-layer capacitor according to one of the preceding claims, **characterised in that** an electrically insulating membrane (2) which is permeable to the electrolyte is arranged between the electrodes (1).

**Revendications**

1. Condensateur à double couche, dans lequel deux électrodes (1) sont disposées à une certaine distance l'une de l'autre, les électrodes (1) étant formées de carbone poreux et étant pourvues de contacts de raccordement électrique (3), et le condensateur à double couche étant disposé dans un électrolyte, ou les électrodes (1) étant mouillées par un électrolyte ;
dans lequel, dans au moins une électrode (1), le carbone formant la ou les électrodes (1) a été obtenu par réaction chimique à partir d'un carbure et présente une aire spécifique d'au moins 2000 $m^2/g$ et dans lequel, outre des pores ayant une première fraction de tailles de pore d'un maximum de 2 nm, des pores ayant une deuxième fraction de tailles de pore, supérieures à 2 nm et allant jusqu'à un maximum de 20 nm, sont présents dans le carbone, **caractérisé en ce que** les pores de la deuxième fraction de tailles de pore sont présents dans le carbone selon un ordre périodique.

2. Condensateur à double couche selon la revendication 1, **caractérisé en ce que** les pores de la première fraction de tailles de pores de 2 nm au maximum sont présents dans le carbone dans une proportion de 0,3 à 1,5 $cm^3/g$, et les pores de la deuxième fraction de tailles de pores allant de 2 nm à 10 nm sont présents dans le carbone dans une proportion de 0,2 à 1,8 $cm^3/g$.

3. Condensateur à double couche selon la revendication 1 ou 2, **caractérisé en ce que** les pores de la deuxième fraction de tailles de pore sont disposés dans des réseaux cubiques et/ou hexagonaux et dans le carbone.

4. Condensateur à double couche selon l'une des revendications précédentes, **caractérisé en ce que** les pores de la première et de la deuxième fraction de tailles de pore sont disposés dans le carbone formant les électrodes (1) selon une répartition homogène.

5. Condensateur à double couche selon l'une des revendications précédentes, **caractérisé en ce que** les électrodes (1) sont formées de SiC comportant du carbone et des pores ayant une taille de pore comprise dans la plage de 2 à 10 nm.

6. Condensateur à double couche selon l'une des revendications précédentes, **caractérisé en ce que** les contacts de raccordement électrique métalliques (3) sont, à l'aide d'un polymère conducteur de l'électricité, reliés aux électrodes (1), par une liaison de matière et avec conduction électrique, sur le côté des électrodes (1) opposé à une membrane (2).

7. Condensateur à double couche selon l'une des revendications précédentes, **caractérisé en ce que** les électrodes (1) présentent une épaisseur de couche comprise dans la plage de 30 à 300 $\mu$m.

8. Condensateur à double couche selon l'une des revendications précédentes, **caractérisé en ce que** le carbone formant les électrodes (1) est lié à un polymère, la proportion du polymère étant inférieure à 20 % en masse.

9. Condensateur à double couche selon l'une des revendications précédentes, **caractérisé en ce qu'**une membrane (2), isolante électriquement et perméable aux électrolytes, est disposée entre les électrodes (1).

## FIG 1

Aktivkohle                    Aluminiumfolie

FIG 2

FIG 3

a)

spezifische Kapazitanz [F/g]

mesoporous CDC:
700 °C 800 °C 900 °C

CDC, 20-30 nm

CDC, 5-20 μm

YP17D

Stromdichte [mA/g]

b)

spezifische Kapazitanz [F/g]

mesoporous CDC:
700 °C 800 °C 900 °C

CDC, 20-30 nm

YP17D

CDC, 5-20 μm

Frequenz [Hz]

c)

Energiedichte [Wh/kg]

mesoporous CDC:
700 °C 800 °C 900 °C

CDC, 20-30 nm

CDC, 5-20 μm

YP17D

Leistungsdichte [W/kg]

EP 2 537 168 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2003123784 A2

- WO 2009123784 A2

**In der Beschreibung aufgeführte Nicht-Patentliteratur**

- **R. K. DASH.** Synthesis, structure and porosity analysis of microporous and mesoporous carbon derived from zirconium carbide. ELSEVIER SCIENCE PUBLISHING, 28. November 2005, vol. 86, 50-57